# EUROPEAN PATENT SPECIFICATION

(11) **EP 0 679 607 B1**
(45) Date of publication and mention of the grant of the patent: **27.05.1998**
(21) Application number: 95106374.2
(22) Date of filing: 27.04.1995
(51) Int. Cl.: C01B 7/19

(54) **Transportation of hydrogen fluoride**
Transport von Flusssäure
Transport d'acide fluorhydrique

(30) Priority: 28.04.1994 US 234453
(43) Date of publication of application: 02.11.1995
(73) Proprietor: PHILLIPS PETROLEUM COMPANY, Bartlesville Oklahoma 74004 (US)
(72) Inventor: Randolph, Bruce B., Bartlesville, Oklahoma 74006 (US); Anderson, Richard L., Bartlesville, OK 74006 (US); Eldridge, Robert B., Bartlesville, OK 74006 (US)
(74) Representative: Dost, Wolfgang, Dr.rer.nat., Dipl.-Chem.

(56) References cited:
- US-A- 3 723 484
- US-A- 3 728 335
- PATENT ABSTRACTS OF JAPAN vol. 6 no. 177 (C-124) [1055],11 September 1982 & JP-A-57 092502 (ASAHI GLASS KK) 9 June 1982
- CHEMICAL ABSTRACTS, vol. 82, no. 26, 30 June 1975 Columbus, Ohio, US; abstract no. 173068z, RANDALL 'safety in handling hazardous chemicals' page 124; & NUCL. SCI. ABSTR, vol. 31, no. 2, 1975

## Description

The present invention relates to an improvement in the safety of the handling and transportation of hydrogen fluoride.

Hydrogen fluoride, or hydrofluoric acid (HF), is highly toxic to human beings and it can be highly corrosive. The toxicity of hydrofluoric acid to human beings is further complicated by the volatility of anhydrous hydrofluoric acid, which is typically a gas at normal atmospheric conditions of one atmosphere pressure and 21.1°C (70°F). It is possible due to the low vapor pressure of hydrofluoric acid at standard atmospheric conditions for a hydrofluoric acid spill to create certain safety concerns when it is exposed to the atmosphere. These safety concerns are created by the ease with which hydrofluoric acid is vaporized and released into the atmosphere. One particular safety concern is in the transportation of hydrofluoric acid; specifically, the concern is over the possibility of an accidental release into the atmosphere of hydrofluoric acid during its transport.

It is, therefore, an object of this invention to improve the safety in the handling and transportation of hydrofluoric acid.

Thus, the method of the present invention relates to the safe transportation of hydrogen fluoride from a point of origin to a desired destination. The improved transportation method includes adding at the point of origin a sulfone to the hydrogen fluoride to form a mixture. The mixture is then transported to the desired destination where the hydrogen fluoride and sulfone components are separated. The separated sulfone is returned to the point of origin for reuse as the hydrogen fluoride additive.

Other objects and advantages of the invention will be apparent from the following detailed description of the invention, the appended claims and the drawing in which:
FIG. 1 is a graphical diagram illustrating at a given temperature the change in vapor pressure of the hydrogen fluoride and sulfolane mixture of the invention as a function of the weight percent sulfolane in the mixture.
FIG. 2 provides a schematic representation of the improved transportation method.

Because of the high volatility of HF, its transportation can pose risks to the environment and nearby human beings in the event of an accidental release into the atmosphere. Typical means for transporting HF include, for example, the use of railroad tank cars, tank trucks, pipe lines and vessels which contain HF. It is desirable to minimize the risk associated with a possible release of HF into the atmosphere. The inventive method described herein provides for an improvement in the safety of the handling and transportation of HF.

An important aspect of the present invention is the ability to lower the vapor pressure of the HF being handled or transported for the purpose of minimizing risk associated with such handling or transportation. It has been discovered that the addition of a sulfone diluent to HF has the benefit of providing a resulting mixture having a lower vapor pressure than that of HF alone. It is the solubility of sulfone in HF which permits its mixing and thereby provide the benefit of lowering the vapor pressure of the HF that is being handled. The advantage from using a sulfone in combination with HF to obtain a lower vapor pressure mixture for handling and transportation is that a lesser amount of the HF will vaporize and enter into the atmosphere in cases where the mixture is accidentally exposed to the atmosphere. In particular, when making a comparison between the mixture and HF, one notices a significant difference in the vapor pressures of the two.

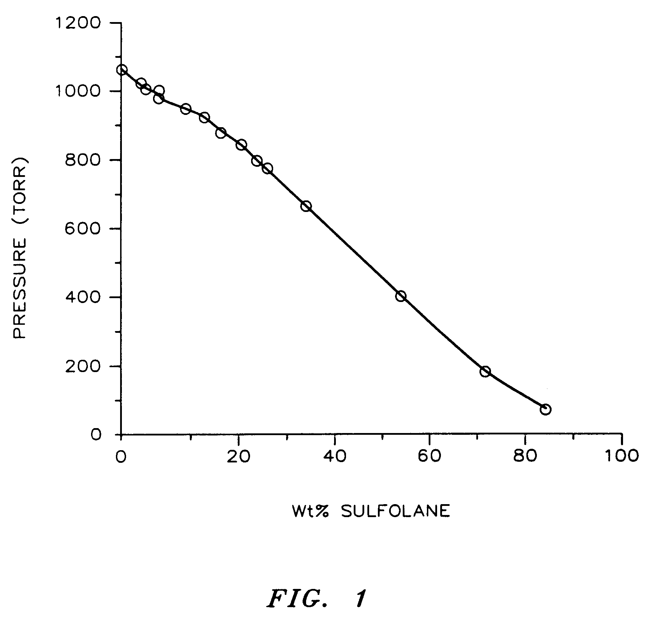

The effect of the presence of sulfolane mixed with hydrogen fluoride is illustrated in the vapor pressure plot of FIG. 1. Since hydrofluoric acid has a substantial vapor pressure at typical atmospheric or ambient conditions, it is often in a vapor state at such conditions, and this vapor pressure makes it a possibly less controllable compound in cases where it is exposed to the atmosphere or environment.

The vapor pressure benefit from adding a sulfone to HF in itself is not sufficient to warrant the combination sulfone and HF due to the need to separate the two components once the mixture has safely reached its destination. But, because of other unique physical properties of sulfone, it can be added to HF and subsequently separated with relative ease. The sulfone can easily be separated from the mixture of HF and sulfone due to the large difference between the relative volatilities of the two components. Therefore, because of the high solubility of sulfone in HF and the widely divergent relative volatilities of the two components, the addition of sulfone to HF can effectively lower its vapor pressure and enhance its handling safety. Once the mixture has been delivered to its destination, the HF can easily be separated from the sulfone and used in its pure form as required.

A novel aspect of the instant invention includes utilizing the advantages of the physical properties of a sulfone by adding to HF that is to be transported a sulfone at a point of origin of the HF. The addition of the sulfone to the HF provides a resultant mixture having a vapor pressure substantially below that of HF alone. The mixture, having a reduced vapor pressure below that of HF, is transported to a desired destination. Once the mixture is safely transported to the desired destination, the components can be separated by any suitable means for separating the mixture into a sulfone phase and an HF phase. The sulfone phase can be returned to the point of origin where it can be reused as a diluent for the HF to be transported.

The sulfone components suitable for use in this invention are the sulfones of the general formula

R-SO₂-R'

wherein R and R' are monovalent hydrocarbon alkyl or aryl substituents, each containing from 1 to 8 carbon atoms. Examples of such substituted products include dimethylsulfone, di-n-propylsulfone, diphenylsulfone, ethylmethylsulfone and the alicyclic sulfones wherein the SO₂ group is bonded to a hydrocarbon ring. In such a case, R and R' are forming together a branched or unbranched hydrocarbon divalent moiety preferably containing from 3 to 12 carbon atoms. Among the latter, tetramethylenesulfone or sulfolane, 3-methylsulfolane and 2,4-dimethylsulfolane are more particularly suitable since they offer the advantage of being liquid at process operating conditions of concern herein. These sulfones may also have substituents, particularly one or more halogen atoms, such as for example, chloromethylethylsulfone. These sulfones may advantageously be used in the form of mixtures.

The hydrogen fluoride component of this invention can be in anhydrous form, but, generally, the hydrogen fluoride component utilized can have a small amount of water. The amount of water present in the hydrogen fluoride and sulfone mixture in no event can be more than about 30 weight percent of the total weight of the hydrogen fluoride component, which includes the water, and preferably, the amount of water present in the hydrogen fluoride component is less than about 10 weight percent. Most preferably, the amount of water present in the hydrogen fluoride component is less than 5 weight percent. When referring herein to the hydrogen fluoride component, it should be understood that the term means either the hydrogen fluoride component as an anhydrous mixture or a mixture that includes water. The references herein to weight percent water contained in the hydrogen fluoride component means the ratio of the weight of water to the sum weight of the water and hydrogen fluoride multiplied by a factor of 100 to place the weight ratio in terms of percent.

The mixture formed by adding the sulfone to the HF at the point of origin of the HF will include the sulfone at a concentration suitable for providing a desired vapor pressure depressant effect. Generally, the weight ratio of the sulfone to HF of the mixture will be in the range of from about 1:100 to about 100:1. Preferably, the weight ratio will be in the range of from about 1:20 to about 20:1 and, most preferably, the weight ratio can be from 1:5 to 5:1. The method by which the sulfone and HF mixture is transported can be any mode or means which suitably can be used to bulk transfer such a liquid mixture. Such suitable means are described at length in Perry's Chemical Engineer's Handbook, Sixth Edition, published by McGraw-Hill, Inc. 1984, at pages 6-110 through 6-113. Specifically, suitable transportation means include, for example, pipe lines, tank cars, and tank trucks, or portable tanks, drums, barrels, and bottles which are shipped by rail, ship, air or truck. The preferred transportation means is by tank car or by tank truck.

Once the mixture of sulfone and HF has reached its destination, the HF can be separated from the sulfone. The separated HF can be used as desired. Thus, the mixture undergoes a separation step whereby a sulfone phase is formed and a hydrogen fluoride phase is formed. Any suitable method can be used to separate the HF component from the sulfone component, such as, for example, flash separation, distillation, extraction, stripping, and other suitable separation methods. One method is by stripping means for separating the mixture into an overhead stream, comprising a major portion of the HF component of the mixture, and a bottoms stream, comprising a major portion of the sulfone component of the mixture, with the use of vaporous butane, which is preferably isobutane, as the stripping agent. A preferred method for separating the sulfone from the HF is by a single-stage, equilibrium-flash process to produce a sulfone phase and an HF phase. The wide divergence in the boiling temperatures of the two components of HF and sulfone makes feasible the use of flash separation means and the overall method for the safe transportation of hydrogen fluoride.

In some circumstances, due to the need to have a reasonably high purity hydrogen fluoride material for use in certain manufacturing processes and due to the recycling or reuse of the separated sulfone, having a high purity separated sulfone is not necessarily as important as having a high purity hydrogen fluoride. Thus, in the situation where a high purity hydrogen fluoride phase is required it will comprise hydrogen fluoride and contain a weight ratio of sulfone to hydrogen fluoride of less than about 2:100. Preferably, the weight ratio of sulfone to hydrogen fluoride in the hydrogen fluoride phase can be less than about 1:100 and, most preferably, it is less than 1:200.

It is not necessary for the sulfone phase to be substantially free of HF due to its reuse as an additive with HF prior to the transportation of the resultant mixture. Therefore, the sulfone phase comprises sulfone and can contain hydrogen fluoride at a concentration of less than about 20 weight percent based on the total weight of the sulfone phase. Preferably, the sulfone phase can contain less than about 10 weight percent hydrogen fluoride and, most preferably, less than 5 weight percent hydrogen fluoride.

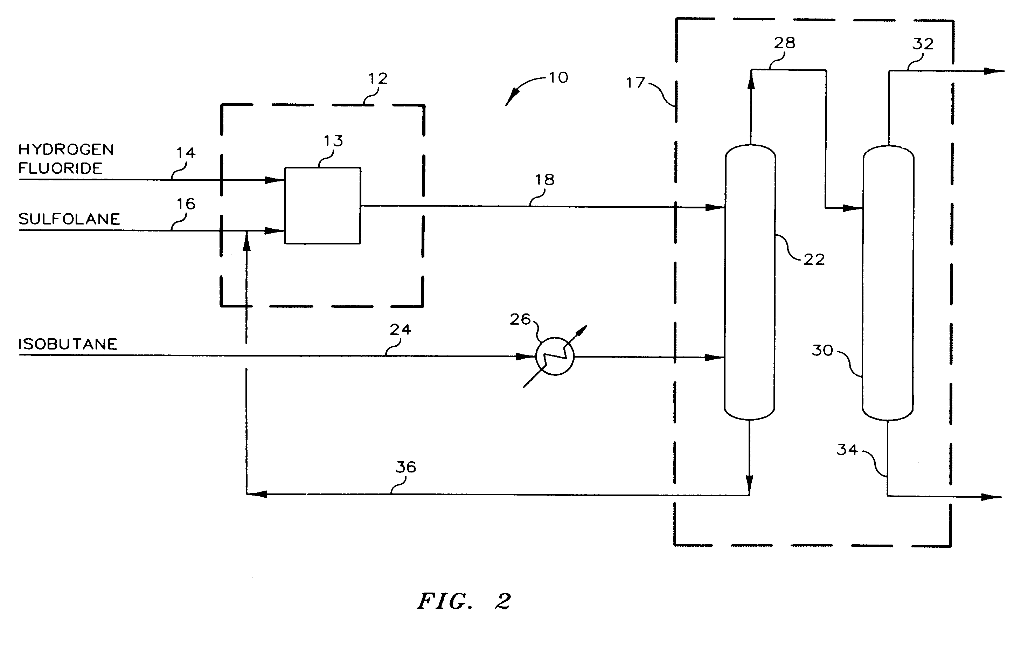

Now referring to FIG. 2, there is depicted a schematic representation of the improved method or process 10 for transporting hydrogen fluoride. At point of origin 12, hydrogen fluoride is conveyed to mixing device 13 by way of conduit 14. Sulfolane is conveyed to mixing device 13 through conduit 16. Mixing device 13 provides for the addition of sulfolane to hydrogen fluoride and for the mixing thereof to form a homogeneous mixture. Thus, mixing device 13 can be any suitable mechanical device, such as, for example, an in-line mixer and a blender. Mixing device 13 defines an adding or mixing zone wherein the components of sulfolane and hydrogen fluoride are added or mixed together to form a homogeneous mixture. The point of origin 12 is the physical location at which the sulfolane and hydrogen fluoride components are combined prior to the conveyance or shipping or transportation of the resulting mixture to a desired location 17.

The point of origin 12 can be a physical location from which hydrogen fluoride must be transported, and, generally, can be a production or manufacturing facility or a storage facility or any other location at which there can be found a volume of hydrogen fluoride. The desired location 17 is a point or place to which it is desired to transfer a volume of hydrogen fluoride.

The mixture comprising sulfolane and hydrogen fluoride is transported or conveyed by any suitable transportation means 18 to the desired destination or location 17. Such suitable transportation means 18 can include, for example, pipe lines, tank cars, tank trucks or even manual methods of transportation.

Once the mixture of sulfolane and hydrogen fluoride has reached the desired destination 17, the hydrogen fluoride is separated from the sulfolane. One method for separating the mixture of sulfolane and hydrogen fluoride into a sulfone phase and a hydrogen fluoride phase is to utilize stripping column 22, which defines a separation zone and provides means for separating sulfolane from hydrogen fluoride. Stripping isobutane is introduced into stripping column 22 by way of conduit 24. Interposed in conduit 24 is heat exchanger 26, which defines a heat transfer zone and provides means for transferring heat energy to the stripping isobutane, preferably, to vaporize the stripping isobutane prior to introducing it into stripping column 22. Thus, stripping column 22 produces an overhead stream, which comprises hydrogen fluoride and isobutane, and a bottoms stream, which comprises sulfolane.

The overhead stream passes from stripping column 22 through conduit 28 and can be utilized as is or can be transferred to separation column 30 whereby the hydrogen fluoride and isobutane are separated. Separation column 30 defines a separation zone and provides means for separating the overhead stream from stripping column 22 into a second overhead stream comprising isobutane and a second bottoms stream comprising hydrogen fluoride. The second overhead stream passes from separation column 30 by way of conduit 32 and second bottoms stream passes from separation column 30 by way of conduit 34.

The bottoms stream from stripping column 22 can be recycled or returned to the point of origin 12 by way of transportation means 36. As described elsewhere herein, transportation means 36 which can be any suitable transportation means such as, for example, pipe lines, tank cars, tank trucks and manual methods. The recycled bottoms stream is reused as an additive to mixing device 13.

A preferred alternative to the above-described separation of the sulfolane and hydrogen fluoride mixture into a sulfolane phase and a hydrogen fluoride phase includes the use of a single-stage, flash separation means whereby the mixture undergoes a single-stage, equilibrium-flash process for providing a sulfone phase and a hydrogen fluoride phase. The sulfone phase can be reused at the point of origin 12.

## Claims

1. A method for the safe transportation of hydrogen fluoride from a point of origin to a desired destination, said method comprising the steps of:
adding at said point of origin a sulfone to the hydrogen fluoride to form a mixture;
transporting said mixture to said desired destination;
separating at said desired destination said mixture into a sulfone phase and a hydrogen fluoride phase; and
returning said sulfone phase to said point of origin to reuse as said sulfone.

2. A method as recited in claim 1 wherein said mixture includes a weight ratio of sulfone to hydrogen fluoride in the range of from about 1:100 to about 100:1.

3. A method as recited in claim 2 wherein said sulfone phase comprises sulfone and contains less than about 20 weight percent hydrogen fluoride.

4. A method as recited in claim 3 wherein said hydrogen fluoride phase comprises hydrogen fluoride and contains a weight ratio of sulfone to hydrogen fluoride of less than about 2:100.

## Patentansprüche

1. Verfahren zum sicheren Transport von Fluorwasserstoff von einem Ursprungsort zu einem gewünschten Bestimmungsort, wobei das Verfahren folgende Stufen umfaßt:
das Zugeben eines Sulfons zum Fluorwasserstoff am Ursprungsort unter Bildung eines Gemisches;
das Transportieren des Gemisches zum gewünschten Bestimmungsort;
das Trennen des Gemisches am gewünschten Bestimmungsort in eine Sulfonphase und eine Fluorwasserstoffphase; und
das Rückführen der Sulfonphase an den Ursprungsort zur Wiederverwendung als Sulfon.

2. Verfahren nach Anspruch 1, wobei das Gemisch ein Gewichtsverhältnis von Sulfon zu Fluorwasserstoff im Bereich von etwa 1:100 bis etwa 100:1 aufweist.

3. Verfahren nach Anspruch 2, wobei die Sulfonphase Sulfon umfaßt und weniger als etwa 20 Gew.-% Fluorwasserstoff enthält.

4. Verfahren nach Anspruch 3, wobei die Fluorwasserstoffphase Fluorwasserstoff umfaßt und ein Sulfon/Fluorwasserstoff/Gewichtsverhältnis von weniger als etwa 2:100 aufweist.

## Revendications

1. Un procédé pour le transport sûr de fluorure d'hydrogène d'un point d'origine à une destination souhaitée, ce procédé comprenant les étapes suivantes :
addition audit point d'origine d'une sulfone au fluorure d'hydrogène pour former un mélange ;
transport de ce mélange à la destination souhaitée ;
séparation, à ladite destination souhaitée, de ce mélange en une phase sulfone et une phase fluorure d'hydrogène ; et
renvoi de la phase sulfone au point d'origine pour réutilisation en tant que sulfone ci-dessus.

2. Un procédé selon la revendication 1, dans lequel le mélange présente un rapport pondéral de la sulfone au fluorure d'hydrogène compris dans la plage allant d'environ 1:100 à environ 100:1.

3. Un procédé selon la revendication 2, dans lequel la phase sulfone comprend de la sulfone et contient moins d'environ 20 % en poids de fluorure d'hydrogène.

4. Un procédé selon la revendication 3, dans lequel la phase fluorure d'hydrogène comprend du fluorure d'hydrogène et présente un rapport pondéral de la sulfone au fluorure d'hydrogène inférieur à environ 2:100.
